Europäisches Patentamt

European Patent Office

Office européen des brevets

(11) Veröffentlichungsnummer: **0 070 537**
**B1**

(12) # EUROPÄISCHE PATENTSCHRIFT

(45) Veröffentlichungstag der Patentschrift :
09.10.85

(51) Int. Cl.⁴ : **A 01 F 15/00**

(21) Anmeldenummer : 82106409.4

(22) Anmeldetag : 16.07.82

(54) Ballenformvorrichtung zum Herstellen von zylindrischen Ballen aus Erntegut.

(30) Priorität : 20.07.81 US 285178

(43) Veröffentlichungstag der Anmeldung :
26.01.83 Patentblatt 83/04

(45) Bekanntmachung des Hinweises auf die Patenterteilung : 09.10.85 Patentblatt 85/41

(84) Benannte Vertragsstaaten :
BE DE FR GB IT LU NL

(56) Entgegenhaltungen :
DE-B- 2 940 241
GB-A- 2 066 146
US-A- 4 121 513

(73) Patentinhaber : **DEERE & COMPANY**
1 John Deere Road
Moline Illinois 61265 (US)

(72) Erfinder : **Viaud, Jean**
Chargey-Les-Gray
F-70100 Gray (FR)

(74) Vertreter : **Fricke, Joachim, Dr. et al**
Dr. R. Döring, Dr. J. Fricke, Patentanwälte Josephspitalstrasse 7
D-8000 München 2 (DE)

## Beschreibung

Die Erfindung betrifft eine Ballenformvorrichtung zum Herstellen von zylindrischen Ballen aus Erntegut mit zwei im gegenseitigen Abstand angeordneten Seitenwänden zur Unterstützung einer Mehrzahl von mit den Achsen parallel zueinander und im gegenseitigen Abstand angeordneten Walzen oder Rollen, bei der mehrere gemeinsam eine Ballenformkammer mit Ernteguteintritt begrenzende Bänder vorgesehen sind, von denen jeweils wenigstens eine in der gleichen Fläche nebeneinander liegen und gleichsinnig und gemeinsam über vorbestimmte Walzen oder Rollen laufen und ein zusätzliches, an die Ballenformkammer grenzendes Volumen zwischen den Seitenwänden begrenzen.

Ballenformvorrichtungen dieser Art sind in verschiedenen Ausführungsformen aus den US-PS'n 41 21 513, 41 82 101 oder 42 24 867 bekannt. Gemäß der US-PS 41 21 513 wird die Ballenformkammer zwischen den Seitenwänden von zwei Sätzen von Bändern begrenzt, die abgesehen vom unmittelbaren Bereich der Ballenformkammer über entsprechend unabhängige getrennte Rollensätze laufen. In jedem Bändersatz laufen mehrere Bänder in der gleichen Fläche nebeneinander und gleichsinnig und gemeinsam über die zugehörigen Walzen oder Rollen und begrenzen angrenzend an die Ballenformkammer ein zusätzliches Volumen zwischen den Seitenwänden. Bei den Ballenformvorrichtungen gemäß den US-PS'n 41 82 101 und 42 24 867 ist nur ein einziger Bändersatz vorgesehen, wobei alle Bänder gleichsinnig und nebeneinanderliegend über ihnen gemeinsam zugeordnete Walzen oder Rollen laufen.

Bei diesen Ballenformvorrichtungen besteht ein Problem darin, daß sich Erntegut auch in dem von den Bändern außerhalb und angrenzend an die Ballenformkammer begrenzten Volumen sammeln kann. Es handelt sich hierbei im wesentlichen um Erntegutteilchen, die zwischen den Bändern aus der Ballenformkammer heraus in die angrenzenden Volumina gedrängt wird. Das in diesen Volumina eingefangene Erntegut neigt dazu sich um die benachbarten Walzen oder Rollen zu wickeln, wodurch die genaue Führung der Bänder auf den Walzen oder Rollen erheblich beeinträchtigt wird. Auch kann dadurch eine Vergrößerung der Ballenformkammer entsprechend der Zunahme des Durchmessers des zylindrischen Ballens verzögert werden. Findet eine Abhilfe nicht statt, kann dies dazu führen, daß die Bänder festlaufen und reißen.

Es ist Aufgabe der Erfindung hier auf einfache Weise Abhilfe zu schaffen, so daß ein Aufwickeln des in die angrenzenden Volumina eintretenden Erntegutes auf die benachbarten Walzen oder Rollen weitgehend vermieden oder ausgeschlossen wird.

Diese Aufgabe wird dadurch gelöst, daß von den nebeneinanderliegenden Bändern wenigstens eines so angeordnet ist, daß es von zwei in Laufrichtung der Bänder unmittelbar aufeinanderfolgenden Walzen oder Rollen die eine derart überspringt, daß eine Öffnung im unteren Bereich des Volumens gebildet ist, aus der in dem Volumen angesammeltes Erntegut entweichen kann. Diese Maßnahme läßt sich bei jeder der eingangs genannten, bekannten Ballenformvorrichtungen auf einfache Weise verwirklichen. Die Führung der Bänder im Bereich der Ballenformkammer wird durch die zueinander versetzt liegenden Walzen oder Rollen nicht berührt. Die betreffenden und unmittelbar aufeinanderfolgenden Walzen oder Rollen können so weit gegeneinander versetzt werden, daß die dadurch entstehende Öffnung zwischen unmittelbar benachbarten Bändern für das sichere Entweichen des Erntegutes aus dem zusätzlichen Volumen ausreichend ist.

Um zu vermeiden, daß das Entweichen des Erntegutes aus diesen Öffnungen durch die Seitenwände behindert wird, ist es zweckmäßig, daß von den beiden in Laufrichtung der Bänder unmittelbar aufeinanderfolgenden Walzen oder Rollen die eine in Fahrtrichtung der Ballenformvorrichtung gegenüber der anderen versetzt angeordnet ist und daß jeweils, von einer Seitenwand aus gesehen, das erste der nebeneinanderliegenden Bänder über die in Fahrtrichtung vordere Walze oder Rolle und das nächstfolgende Band über die demgegenüber zurückliegende Walze oder Rolle geführt ist.

Dadurch wird erreicht, daß die sich durch die Versetzung der Walzen oder Rollen ergebende Öffnung aus dem zusätzlichen Volumen von der benachbarten Seitenwand weg öffnet, so daß das Erntegut ungestört durch die Seitenwand aus diesem Volumen und durch diese Öffnung austreten kann.

Durch die Anordnung der zueinander versetzten Walzen im unteren Bereich des Volumens wird sichergestellt, daß alles sich in diesem unteren Bereich des zusätzlichen Volumens ansammelnde Erntegut durch diese Öffnungen austreten kann.

Die Versetzung der Walzen und die unterschiedliche Führung der Bänder im Bereich dieser Walzen oder Rollen kann auf verschiedene Weise verwirklicht werden, wobei es in einigen Fällen auch ausreichen kann, wenn nur ein einziges Band von den nebeneinanderliegenden Bändern im Bereich dieser Walzen oder Rollen anders geführt ist als die übrigen Bänder.

Die beiden aufeinanderfolgenden Rollen oder Walzen, von denen wenigstens eine von wenigstens einem Band übersprungen wird, sind vorteilhafterweise gestellfest gelagert. Dadurch wird sichergestellt, daß das Ausmaß der Öffnungen, durch die das Erntegut aus dem zusätzlichen Volumen austreten kann, stets gleich bleibt, unabhängig von der Veränderung der Durchmessers der Ballenformkammer und unabhängig von der dazu erforderlichen Veränderung der Lage einiger der Rollen oder Walzen.

Vorteilhafterweise liegen die gegeneinander versetzten Walzen oder Rollen unmittelbar neben dem Ernteguteintritt in die Ballenformkammer. Zu diesem Zweck können die Trume aller nebeneinanderliegender Bänder, die über die erste oder über die zweite Walze oder Rolle laufen, in Laufrichtung hinter diesen beiden Walzen oder Rollen in einer gemeinsamen Ebene liegen und den Ernteguteintritt begrenzen. Hierdurch wird auf einfache Weise sichergestellt, daß das aus dem zusätzlichen Volumen austretende Erntegut nicht verlorengeht, sondern von einem Erntegutaufnehmer oder dgl. der Ballenformvorrichtung erfaßt und erneut der Ballenformkammer zugeführt werden kann.

Die Erfindung wird nachfolgend anhand schematischer Zeichnungen an mehreren Ausführungsbeispielen näher erläutert.

Es zeigen:

Figur 1 eine Seitenansicht einer typischen Ballenformvorrichtung zum Herstellen von zylindrischen Ballen aus Erntegut, wobei die dem Betrachter zunächst liegende Seitenwand zur Freilegung der inneren Teile weggelassen sind.

Figur 2 eine perspektivische Darstellung im Ausschnitt, welche noch besser die neue Anordnung der Walzen und Rollen und Riemen der Ballenformvorrichtung gemäß der Erfindung nach Fig. 1 zeigt.

Figur 3 eine Seitenansicht in ähnlicher Darstellung wie Fig. 1 einer Ballenformvorrichtung gemäß einer zweiten Ausführungsform der Erfindung und

Figur 4 im Ausschnitt und in perspektivischer Darstellung den vorderen Teil der Ballenformvorrichtung nach Fig. 3.

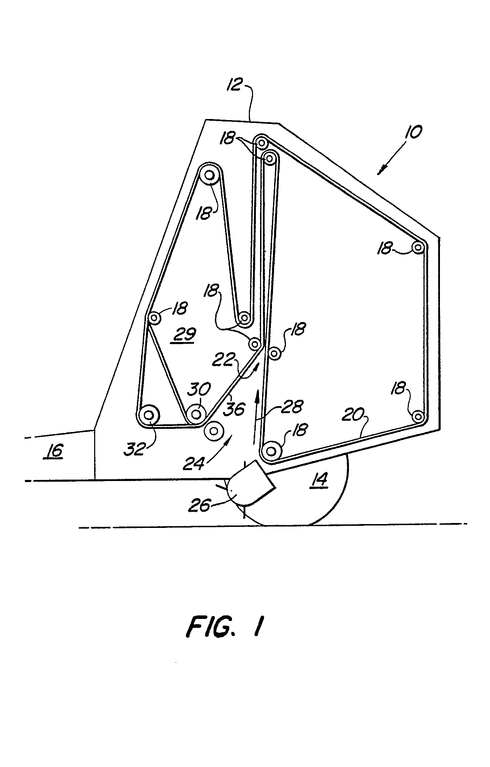

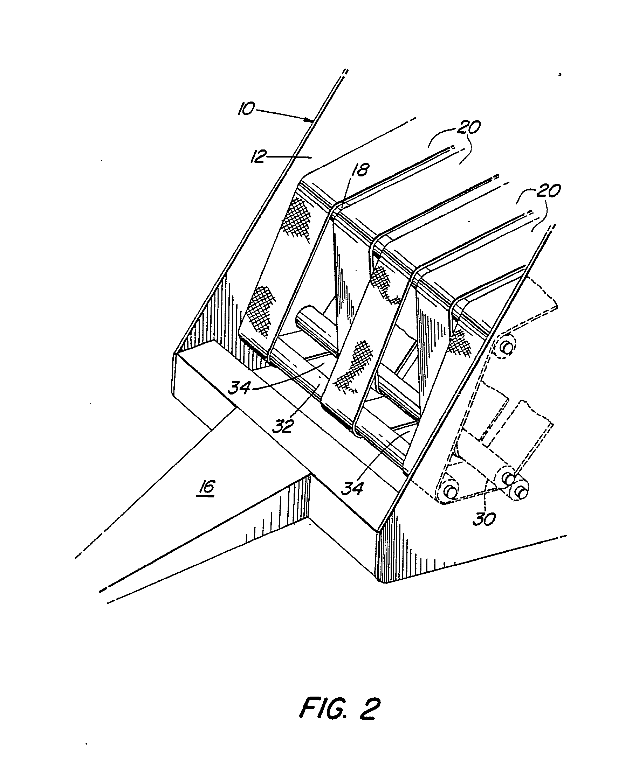

Die Figuren 1 und 2 zeigen eine Ballenformvorrichtung gemäß einem bevorzugten Ausführungsbeispiel der Erfindung. Der generelle Aufbau der Ballenformvorrichtung ist üblich und entspricht im wesentlichen dem bekannten Ballenformvorrichtungen z. B. nach den US-PSn 41 82 101 und 42 52 057.

Die Ballenformvorrichtung weist in üblicher Weise ein Gestell oder eine Trageinrichtung 10 auf, welche mehrere verschiedene Querglieder (nicht gezeigt) zwischen zwei aufrechten Seitenwänden 12 aufweist. Die Ballenformvorrichtung ist auf Rädern 14 abgestützt und wird hinter einem Ackerschlepper (nicht gezeigt) über eine Zugstange oder Deichsel 16 nachgeschleppt. Mehrere Rollen oder Walzen, welche einen Satz von Rollen oder Walzen 30, 32 sowie eine Gruppe von üblichen Rollen oder Walzen 18 umfaßt, ist zwischen den Seitenwänden angeordnet, wobei die einzelnen Rollen oder Walzen entsprechend in den Seitenwänden gelagert sind. Riemen 20 sind um diese Rollen oder Walzen herumgelegt, um eine Ballenformkammer 22 zu begrenzen, die nach unten bei 24 zu einem Ernteguteinlaß offen ist, der das Erntegut von einer üblichen Erntegutaufnahmeeinrichtung 26 zugespeist bekommt.

Bei dieser bekannten Ballenformvorrichtung wird das in den Einlaß eintretende Erntegut durch die Wirkung der Riemen zu einem Kern aufgewickelt aus dem der Ballen entsteht. Dabei werden ausgewählte Walzen oder Rollen entsprechend der Zunahme des Durchmessers des Ballens relativ zu anderen Walzen oder Rollen bewegt, so daß die Ballenformkammer sich zunehmend ausdehnt entsprechend der Zunahme des Durchmessers des zylindrischen Ballens. Der Kern des Ballens entsteht zwischen sich entgegengesetzt bewegenden Trumen von Riemen, wobei Pfeil 28 die Bewegungsrichtung der Trume der Riemen von der Rolle gerade oberhalb der Aufnahmestelle zur nächsthöher liegenden Rolle anzeigt. Mit Ausnahme der Rollen 30, 32 und der Riemenführung auf diesen Rollen oder Walzen ist die soweit beschriebene Ballenformvorrichtung üblich und entspricht in ihrem Aufbau und ihrer Wirkungsweise im wesentlichen den bekannten Ballenformvorrichtungen der oben genannten Druckschriften. Eine nähere Erläuterung des Aufbaus und der Wirkungsweise ist daher auch nicht erforderlich.

Bei Ballenformvorrichtungen dieser Art tritt das Problem auf, daß Erntegut in Volumen eingefangen wird, welche außerhalb der Ballenformkammer und angrenzend an diese liegen. Ein Beispiel hierfür ist das Volumen 29, das durch die Seitenwände 12, die Riemen 20 und die Rollen 18 begrenzt ist und welches mit der Ballenformkammer 22 benachbart ist. In diesem Volumen 29 kann das Erntegut, das zu Ballen verarbeitet werden soll, während der Ballenbildung eingefangen werden.

Gemäß der Erfindung sind Maßnahmen getroffen, um zu ermöglichen, daß das eingefangene Erntegut leicht aus diesen angrenzenden Volumen wieder heraustreten kann. Diese Maßnahmen bestehen in erster Linie in einer besonderen abgestaffelten Anordnung von benachbarten Rollen oder Walzen, im vorliegenden Fall in der Anordnung der Walzengruppe 30, 32. Die Walze 30 wird durch die nicht dargestellte Zapfwelle des Ackerschleppers angetrieben. Die Walzengruppe 30, 32 ist bevorzugt benachbart dem Ernteguteinlaß 24 vorgesehen. Die Walzen besitzen einen gegenseitigen Abstand und sind vorzugsweise gestellfest gelagert, d. h. sie nehmen nicht an einer Lageänderung bei Vergrößerung der Ballenformkammer während eines Ballenformvorganges Teil. Wie am besten aus Fig. 2 ersichtlich ist, läuft jeder zweite Riemen nur um eine der gestaffelt angeordneten Walzen 30, 32, d. h. um die Walze 30, während die übrigen Riemen oder Bänder über beide Walzen oder Rollen 30, 32 geführt sind. Die anderen Trume aller Riemen laufen über den Rest der üblichen Rollen 18, wie dies üblich ist, und zwar parallel zueinander und in gemeinsamen Ebenen.

Da die Riemen im Bereich der Walzen oder Rollen 30 und 32 gegeneinander versetzt angeordnet sind, ergeben sich Zwischenräume oder Öffnungen bei 34, durch welche das Erntegut wieder entweichen kann, bevor es sich auf den Walzen oder Rollen aufwickeln kann und bevor größere Mengen von Erntegut sich im dem angrenzenden Volumen 29 sammeln kann. Es wird erneut darauf hingewiesen, daß einige der Riemen um die Walze 30 und die Rollen 18 aber nicht um die Rolle 32 geführt sind, während andere Riemen über beide Walzen und Rollen 30, 32 und die Rollen 18 geführt sind. Es sollte beachtet werden, daß angrenzende oder nebeneinanderliegende Trume 36 der Riemen 20, die von beiden Rollen oder Walzen 30, 32 zur nächsten Rolle laufen, in einer gemeinsamen Ebene liegen, welche anfänglich tangential zum Kern des in der Bildung befindlichen Ballens verläuft. Wenn der Durchmesser des Ballens zunimmt, passen sich die Trume 36 selbstverständlich an die Oberfläche des Ballen an. Obwohl in der Zeichnung nur fünf Riemen gezeigt sind, kann die Zahl der Riemen selbstverständlich variieren und zwar in Abhängigkeit von der Ausgestaltung und der Größe der Ballenformvorrichtung. Auch wenn in der Figur die Riemen abwechselnd unterschiedlich geführt sind, wie dies auch bevorzugt ist, können andere Anordnungen der Riemenführung vorgesehen sein. So wird darauf hingewiesen, daß wenigstens einer der Riemen gegenüber einem anderen versetzt geführt sein soll, um eine verbesserte Wirkung zu erhalten, obwohl diese vorteilhafte Wirkung hierbei nicht so intensiv ist, die bei der bevorzugten Anordnung der abwechselnden unterschiedlichen Führung von seitlich aufeinanderfolgenden Riemen. Unter bestimmten Erntegutbedingungen kann die Anordnung einer fest angeordneten Stange oder Platte parallel und benachbart von bestimmten Rollen oder Walzen, z. B. von der Rolle 32 wünschenswert sein, um zur Verminderung des Aufwickelns des Erntegutes die Rolle mechanisch frei zu kratzen.

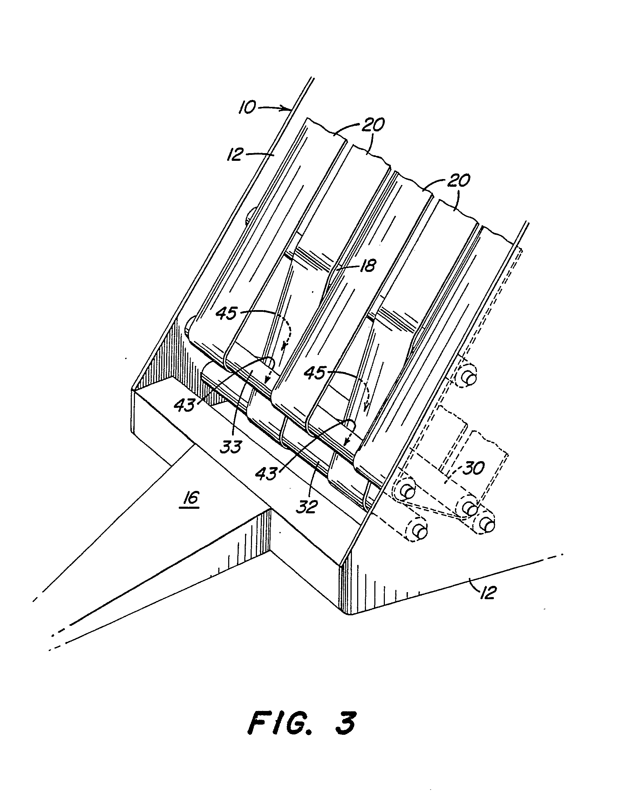

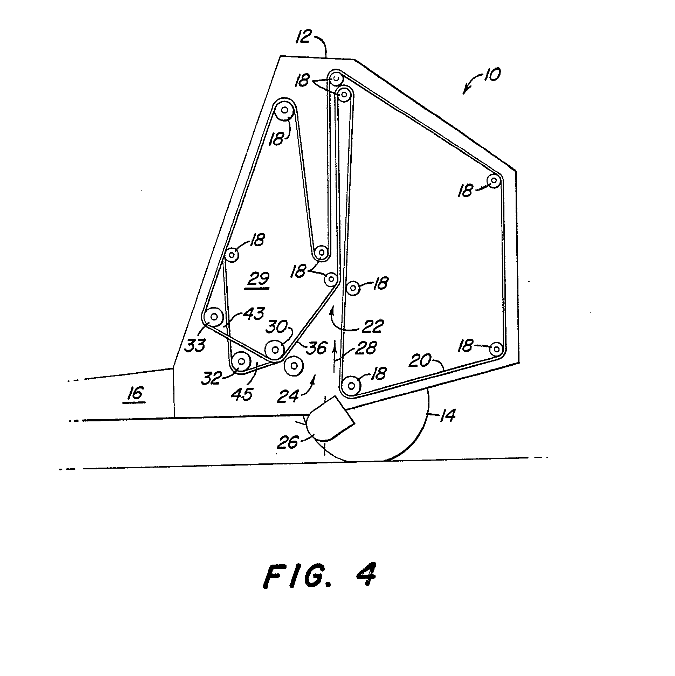

Es wird nun bezug genommen auf das zweite Ausführungsbeispiel der Erfindung nach Figuren 3 und 4. Die Ballenformvorrichtung nach Fig. 3 und 4 ist identisch mit der nach Fig. 1 und 2 mit der Ausnahme, daß eine zusätzliche Walze oder Rolle 33 vorgesehen ist und die Riemen 20 um die Rollen 30, 32 und 33 in besonderer Weise geführt sind. Die Beschreibung des zweiten Ausführungsbeispiels konzentriert sich entsprechend auf diese unterschiedlichen Merkmale. Zur Vereinfachung sind die Bezugsziffern der Elemente in den Figuren 3 und 4 identisch zu denen der korrespondierenden Elemente in den Figuren 1 und 2.

Gemäß dem zweiten Ausführungsbeispiel ist wenigstens einer der Riemen 20 um nur eine der abgestuft angeordneten Rollen geführt, welche bei diesem Ausführungsbeispiel durch die Rollen 32 und 33 gebildet sind. Alle Riemen 20 sind nur um eine der abgestaffelten Rollen 32 und 33 geführt. Jeder zweite Riemen ist nur um die Rolle 32 des Rollenpaares 32 und 33 und die übrigen Riemen sind nur um die Rolle 33 des abgestaffelten Rollenpaares 32 und 33 geleitet. Die anderen Trume aller Riemen 20 sind über eine Gruppe von gemeinsamen Rollen 18 geführt sowie über die Walze 30.

Aufgrund der Tatsache, daß die Riemen 20 in dem Bereich der Walzen 30, 32 und 33 gegeneinander versetzt sind, erhält man Zwischenräume oder Öffnungen 43, 45, durch die das Erntegut entweichen kann, bevor ein Aufwickeln auf den Walzen oder Rollen und eine größere Anhäufung von eingefangenem Erntegut in dem Volumen 29 erfolgen kann. Zusammengefaßt kann festgestellt werden, daß bestimmte Riemen 20 um die Rollen 30 und 32 und gemeinsam um die Rollen 18 aber nicht um die Rollen 33 geführt sind. Der übrige Teil der Riemen ist um die Rollen 30, 33 und die gemeinsamen Rollen 18 aber nicht um die Rolle 32 geführt. Obwohl in den Ausführungsbeispielen die abgestaffelt angeordneten Rollen im Bereich des Ernteguteintritts angeordnet sind, können solche abgestaffelten Rollenpaare statt dessen oder zusätzlich auch an weiteren Stellen der Ballenformvorrichtung vorgesehen sein.

## Patentansprüche

1. Ballenformvorrichtung zum Herstellen von zylindrischen Ballen aus Erntegut mit zwei in gegenseitigem Abstand angeordneten Seitenwänden (12) zur Unterstützung einer Mehrzahl von mit den Achsen parallel zueinander und im gegenseitigen Abstand angeordneten Walzen oder Rollen (18, 30, 32, 33), bei der mehrere gemeinsam eine Ballenformkammer (22) mit Erntguteintritt (24) begrenzende Bänder (20) vorgesehen sind, von denen jeweils wenigstens einige in der gleichen Fläche nebeneinanderliegen und gleichsinnig und gemeinsam über vorbestimmte Walzen oder Rollen laufen und ein zusätzliches, an die Ballenformkammer (22) grenzendes Volumen (29) zwischen den Seitenwänden (12) begrenzen, dadurch gekennzeichnet, daß von den nebeneinanderliegenden Bändern (20) wenigstens eines so angeordnet ist, daß es von zwei in Laufrichtung der Bänder (20) unmittelbar aufeinanderfolgenden Walzen oder Rollen (30, 32 ; 32, 33) die eine derart überspringt, daß eine Öffnung (34 bzw. 43, 45) im unteren Bereich des Volumens (29) gebildet ist, aus der in dem Volumen (29) angesammeltes Erntegut entweichen kann.

2. Ballenformvorrichtung nach Anspruch 1, dadurch gekennzeichnet, daß von den beiden in Laufrichtung der Bänder (20) unmittelbar aufeinanderfolgenden Walzen oder Rollen (30, 32 ; 32, 33) die eine (32 bzs. 33) in Fahrtrichtung gegenüber der anderen (30 bzw. 32) versetzt angeordnet ist, und daß, jeweils von einer Seitenwand (12) aus gesehen, das erste der nebeneinanderliegenden Bänder (20) über die in Fahrtrichtung vordere Walze oder Rolle (32 bzs. 33) und das nachfolgende Band (20) über die demgegenüber zurückliegende Walze oder Rolle (30 bzw. 32) geführt ist.

3. Ballenformvorrichtung nach Anspruch 1 oder 2, dadurch gekennzeichnet, daß von den nebeneinanderliegenden Bändern (20) wenigstens ein anderes Band so angeordnet ist, daß es von den beiden Walzen oder Rollen (32, 33) die andere Walze oder Rolle überspringt.

4. Ballenformvorrichtung nach Anspruch 1 oder 2, dadurch gekennzeichnet, daß von den nebeneinanderliegenden Bändern (20) wenigstens ein anderes Band so angeordnet ist, daß es über die beiden in Laufrichtung hintereinanderliegenden Walzen oder Rollen (30, 32) läuft.

5. Ballenformvorrichtung nach Anspruch 3, dadurch gekennzeichnet, daß von zwei nebeneinanderliegenden Bändern (20) eines über die eine (32) und das andere Band (20) über die andere (33) der beiden aufeinanderfolgenden Rollen oder Walzen (32, 33) geführt sind.

6. Ballenformvorrichtung nach Anspruch 4, dadurch gekennzeichnet, daß von zwei nebeneinanderliegenden Bändern (20) ein Band nur über die eine (30) der beiden Rollen oder Walzen (30, 32) und das andere Band (20) über beide aufeinanderfolgende Rollen oder Walzen (30, 32) geführt sind.

7. Ballenformvorrichtung nach Anspruch 1 oder 2, dadurch gekennzeichnet, daß die beiden aufeinanderfolgenden Rollen oder Walzen (30 bis 33), von denen wenigstens eine von wenigstens einem Band (20) übersprungen wird, gestellfest gelagert sind.

8. Ballenformvorrichtung nach Anspruch 4, dadurch gekennzeichnet, daß die Trume (36) aller Bänder (20), die über die erste oder die zweite Walze oder Rolle (30 bis 33) laufen, in Laufrichtung hinter den beiden Walzen oder Rollen in einer gemeinsamen Ebene liegen und den Ernteguteintritt (24) begrenzen.

## Claims

1. A baler for the production of cylindrical bales from crop material, comprising two side walls (12) which are disposed at a spacing from each other, for supporting a plurality of drums or rollers (18, 30, 32, 33) which are disposed with the axes in parallel relationship to each other and at a spacing from each other, wherein there is provided a plurality of belts (20) which jointly define a baling chamber (22) with crop material intake (24), of which belts at least some are disposed in juxtaposed relationship in the same plane and move in the same direction and jointly over predetermined drums or rollers, and define between the side walls (12) an additional volume (29) adjoining the baling chamber (22), characterised in that of the juxtaposed belts (20) at least one is so arranged that, of two drums or rollers (30, 32 ; 32, 33) which are disposed in direct succession in the direction of movement of the belts (20), said at least one belt omits one such drum or roller in such a way that formed in the lower region of the volume (29) is an opening (34 or 43, 45 respectively) from which crop material accumulated in the volume (29) can escape.

2. A baler according to claim 1 characterised in that, of the two drums or rollers (30, 32 ; 32, 33) which are disposed in direct succession in the direction of movement of the belts (20), the one (32 or 33 respectively) is displaced in the direction of travel relative to the other (30 or 32 respectively), and that, as considered from a respective side wall (12), the first of the juxtaposed belts (20) is passed over the drum or roller (32 or 33) which is at the front in the direction of travel and the following belt (20) is passed over the drum or roller (30 or 32 respectively) which is set back with respect thereto.

3. A baler according to claim 1 or claim 2 characterised in that, of the juxtaposed belts (20), at least one other belt is so arranged that, of the two drums or rollers (32, 33), it omits the other drum or roller.

4. A baler according to claim 1 or claim 2 characterised in that, of the juxtaposed belts (20), at least one other belt is so arranged that it passes over the two drums or rollers (30, 32) which are disposed one behind the other in the direction of movement.

5. A baler according to claim 3 characterised in that, of two juxtaposed belts (20), one belt is passed over the one (32) of the two successive drums or rollers (32, 33) and the other belt (20) is passed over the other (33) of the two successive drums or rollers (32, 33).

6. A baler according to claim 4 characterised in that, of two juxtaposed belts (20), one belt is passed only over the one (30) of the two drums or rollers (30, 32), and the other belt (20) is passed over both successive drums or rollers (30, 32).

7. A baler according to claim 1 or claim 2 characterised in that the two successive drums or rollers (30 to 33) of which at least one is omitted by at least one belt (20) are mounted in fixed relationship to the frame.

8. A baler according to claim 4 characterised in that the runs (36) of all belts (20) which pass over the first or second drum or roller (30 to 33) are disposed in a common plane in the direction of movement downstream of the two drums or rollers and define the crop material intake (24).

## Revendications

1. Dispositif de formation de balles pour la production de balles cylindriques à partir de produits de récolte, comportant deux parois latérales (12) écartées l'une de l'autre pour supporter un certain nombre de cylindres ou rouleaux (18, 30, 32, 33) à axes parallèles entre eux disposés selon un certain écartement relatif, dans lequel il est prévu plusieurs bandes ou courroies (20) délimitant ensemble une chambre de formation des balles (22) munie d'un orifice d'entrée des produits de récolte (24), parmi lesquelles au moins quelques-unes se trouvent l'une à côté de l'autre dans le même plan et passent conjointement et dans le même sens sur des cylindres ou rouleaux prédéterminés, et qui délimitent entre les parois latérales (12) un volume supplémentaire (29) adjacent à la chambre de formation des balles (22), caractérisé en ce que, parmi les bandes (20) disposées les unes à côté des autres, une au moins est disposée de façon telle qu'elle « saute » l'un de deux cylindres ou rouleaux (30, 32 ; 32, 33) se suivant immédiatement dans la direction de déplacement des bandes (20), de façon telle qu'un orifice (34 ou 43, 45) soit ménagé dans la partie inférieure du volume (29), par lequel les produits de récolte accumulés dans le volume (29) peuvent s'échapper.

2. Dispositif de formation de balles suivant la revendication 1, caractérisé en ce que, parmi les deux cylindres ou rouleaux (30, 32 ; 32, 33) se suivant immédiatement dans la direction de déplacement des bandes (20), l'un (32 ou 33) est décalé par rapport à l'autre (30 ou 32) dans le sens de la marche et en ce que, quand on regarde depuis une paroi latérale (12), la première des bandes (20) disposées l'une à côté de l'autre passe chaque fois sur le cylindre ou rouleau avant (32 ou 33) dans le sens de la marche, tandis que la bande suivante (20) passe sur le cylindre ou rouleau (30, 32) situé en arrière par rapport au précédent.

3. Dispositif de formation de balles suivant la revendication 1 ou 2, caractérisé en ce que, parmi les bandes (20) disposées l'une à côté de l'autre, au moins une autre bande est disposée de façon telle qu'elle « saute » l'autre cylindre ou rouleau parmi les deux cylindres ou rouleaux (32, 33).

4. Dispositif de formation de balles suivant la revendication 1 ou 2, caractérisé en ce que, parmi les bandes (20) disposées l'une à côté de l'autre, au moins une autre bande est disposée de façon telle qu'elle passe sur les deux cylindres ou rouleaux (30, 32) disposés l'un derrière l'autre dans la direction de déplacement.

5. Dispositif de formation de balles suivant la revendication 3, caractérisé en ce que, parmi deux bandes (20) disposées l'une à côté de l'autre, une bande est guidée sur l'un (32) et l'autre bande (20) sur l'autre (33) des deux rouleaux ou cylindres (32, 33) qui se suivent.

6. Dispositif de formation de balles suivant la revendication 4, caractérisé en ce que, parmi deux bandes (20) disposées l'une à côté de l'autre, une bande n'est guidée que sur l'un (30) des deux rouleaux ou cylindres (30, 32), tandis que l'autre bande (20) est guidée sur deux rouleaux ou cylindres successifs (30, 32).

7. Dispositif de formation de bandes suivant la revendication 1 ou 2, caractérisé en ce que les deux rouleaux ou cylindres successifs (30 à 33) parmi lesquels l'un au moins est « sauté » par au moins une bande (20) sont tourillonnés à poste fixe.

8. Dispositif de formation de balles suivant la revendication 4, caractérisé en ce que les brins (36) de toutes les bandes (20) qui passent sur le premier ou le second cylindre ou rouleau (30 à 33) se trouvent, en arrière des deux cylindres ou rouleaux si l'on considère le sens de marche, dans un plan commun, et délimitent l'orifice d'entrée des produits de récolte (24).

FIG. 1

FIG. 2

2

FIG. 3

FIG. 4